# EUROPÄISCHE PATENTSCHRIFT

(11) **EP 2 508 695 B1**
(45) Veröffentlichungstag und Bekanntmachung des Hinweises auf die Patenterteilung: **23.11.2016**
(21) Anmeldenummer: 12466005.1
(22) Anmeldetag: 21.03.2012
(51) Int. Cl.: B60R 7/06, B60R 7/10

(54) **Handschuchfachdeckel mit Griff und einem ausklappbaren Haken**
Glove compartment lid with handle and fold-out hook
Couvercle de boîte à gants avec poignée et crochet dépliable

(30) Priorität: 07.04.2011 CZ 20110201
(43) Veröffentlichungstag der Anmeldung: 10.10.2012
(73) Patentinhaber: Skoda Auto A.S., 293 60 Mladá Boleslav (CZ)
(72) Erfinder: Kutil, Jaroslav, Benatky nad Jizerou CZ 29471 (CZ); Wasserbauer, Ondrej, Mlada Boleslav-Cejetice CZ-293 01 (CZ)

(56) Entgegenhaltungen:
- DE-A1- 10 155 941
- FR-A1- 2 894 907
- GB-A- 2 336 395
- US-A1- 2004 051 333

## Beschreibung

### Technisches Gebiet

Die Erfindung betrifft den Handschuhfachdeckel im Fahrzeug, dessen Bestandteil ein zum Öffnen dienende Griff mit einem integrierten ausklappbaren Haken zum Aufhängen verschiedener zu transportierenden Gegenstände, wie z. B. Taschen oder Oberbekleidungsstücke und Kopfbedeckungen ist.

### Bisheriger Stand der Technik

In der Praxis ist aus dem Stand der Technik die Lösung des Handschuhfachdeckels im Fahrzeug bekannt, die eine Aussparung aufweist, in der ein Griff zum Öffnen des Deckels und ein ausklappbarer Haken angeordnet sind. Die Lösung ist im Dokument US 5,975,594 beschrieben. Der Nachteil liegt darin, dass der Griff und der ausklappbare Haken gegenseitig nicht interagieren, was bedeutet, dass diese separat unabhängig voneinander funktionieren. Wird ein schweres Gegenstand aufgehängt, kann sich der Handschuhfachdeckel öffnen und der Gegenstand auf den Boden fallen. Der Griff ist nämlich in dieser Ausführung keinerlei gegen seine Bewegung bzw. das Öffnen des Deckels versperrt.

Weiterer Stand der Technik ist in den Schriften FR 2 894 907 und GB 2 336 395 dargestellt. GB 2 336 395 A entspricht dem Oberbegriff des Anspruchs 1. Beide Lösungen sind nicht genügend kompakt, ästhetisch und zuverlässig.

### Darstellung der Erfindung

Die Aufgabe wird durch die erfindungsgemäße technische Lösung gelöst.

Es handelt sich um eine designmäßig saubere und kompakte Lösung. Der ausklappbare Haken ist in den zum Öffnen des Deckels dienenden Griff integriert und beide Komponenten sind in einer gegenseitigen Interaktion. Wird ein Gegenstand auf den ausklappbaren Haken aufgehängt, kann sich der Griff nicht bewegen und der Handschuhfachdeckel nicht öffnen und der Fall des Gegenstandes auf den Boden wird somit verhindert, da durch die Sicherung des ausgeklappten Hakens wird der Griff versperrt und gegen eine Reaktion auf die belastenden Kräfte gesichert.

### Übersicht der Figuren der Zeichnungen

Die Erfindung wird anhand schematischer Abbildungen näher erläutert, wo die Fig. 1 die Schalttafel mit dem Handschuhfachdeckel mit dem Griff und dem Haken in einer Ruhestellung, die Fig. 2 den Handschuhfachdeckel mit dem Griff und dem ausgeklappten Haken und Fig. 3 den geöffneten Handschuhfachdeckel sowie den Griff mit dem Haken in der geschlossenen Ruhestellung darstellt.

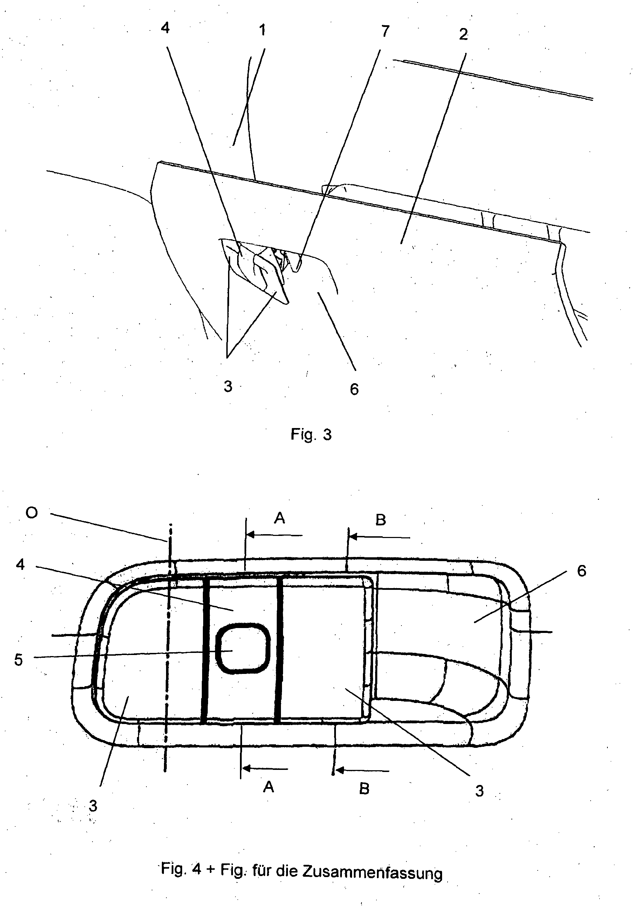

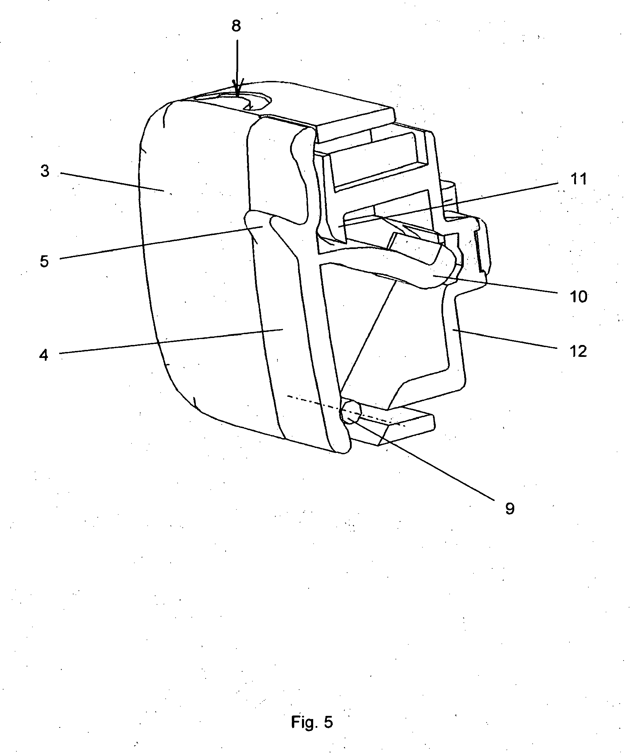

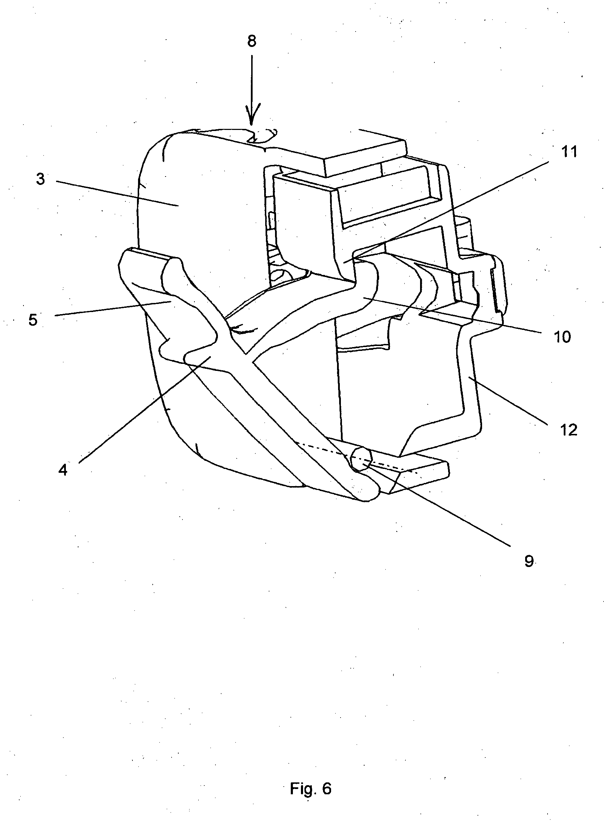

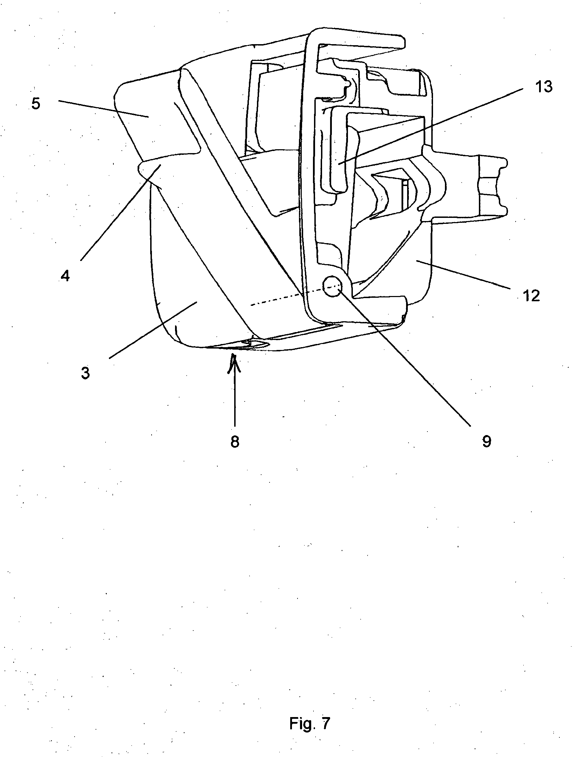

Die Fig. 4 stellt die Frontansicht des im Griff des Handschuhfachdeckels integrierten ausklappbaren Hakens dar. Die Fig. 5 stellt den Schnitt A-A des Handschuhfachdeckelgriffs mit integriertem Haken in geschlossener Ruhestellung dar. Die Fig. 6 stellt den Schnitt A-A des Handschuhfachdeckelgriffs mit integriertem Haken in der ausgeklappten Betriebsstellung dar. Die Fig. 7 stellt den Schnitt B-B des Handschuhfachdeckelgriffs mit integriertem Haken mit einem Hebel dar, der den Haken bei Nutzung des Griffs zum Öffnen in die Ausgangsruhestellung zurückstellt.

### Ausführungsbeispiele der Erfindung

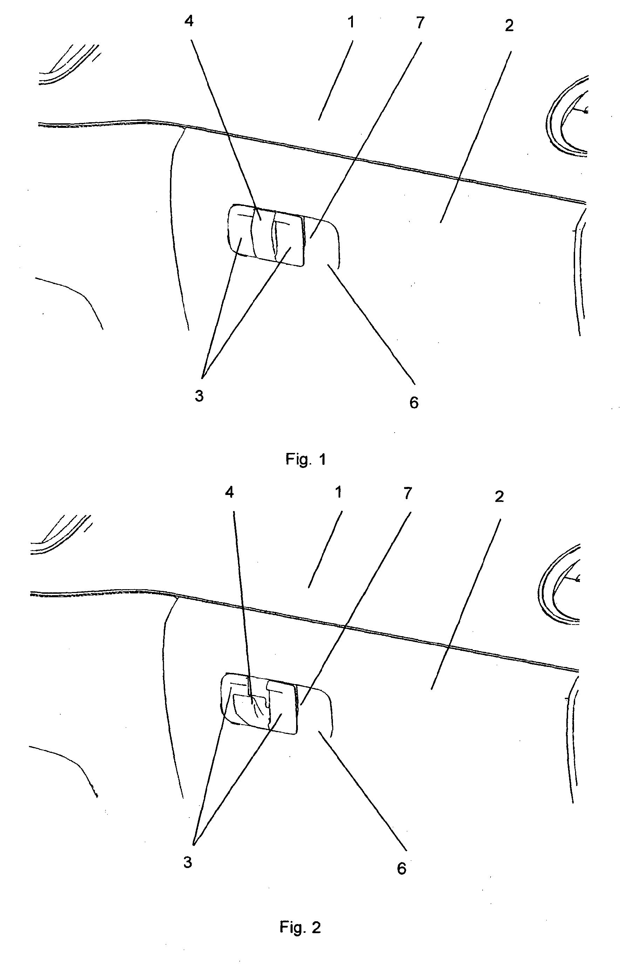

Wie den Figuren 1 bis 3 zu entnehmen ist, weisen die Fahrzeuge an der Schalttafel 1 an der Stelle vor dem Beifahrer ein Fach für die Ablage von Gegenständen auf. Das Fach ist mit einem Deckel 2 geschlossen. Der Deckel 2 weist eine Aussparung 6 auf, in der ein Griff 3 mit dem Mechanismus zum Öffnen des Deckels 2 angeordnet ist. Der Gegenstand der vorliegenden Erfindung ist ein Handschuhfachdeckel 2 mit einem im Griff 3 des Deckels 2 integrierten ausklappbaren Haken 4.

In der Fig. 4 ist die Frontansicht des ausklappbaren Hakens 4 dargestellt, der im Griff 3 des Handschuhfachdeckels 2 integriert ist. In der Aussparung 6 ist ein Griff 3 mit dem integrierten ausklappbaren Haken 4 angeordnet. Der Griff 3 wird mit der Hand bedient bzw. mit den in die Aussparung für Finger 7 eingeschobenen Fingern betätigt. Der Griff 3 und somit auch der Deckel 2 werden durch das Ziehen des Griffs 3 zur den Griff 3 betätigenden Person hin ausgeklappt. Der ausklappbare Haken 4 weist eine Aussparung oder einen Vorsprung 5 auf, mit Hilfe derer der ausklappbare Haken 4 mit den Fingern in die von der geschlossenen Ruhestellung etwa 45° verschwenkte Betriebsstellung ausgeklappt werden kann.

Die Fig. 5 stellt den Schnitt A-A des Griffs 3 des Handschuhfachdeckels 2 mit integriertem klappbaren Haken 4 in geschlossener Ruhestellung dar. Der Mechanismus umfasst einen Träger 12, der in der Aussparung 6 des Deckels 2 befestigt ist. Weiteren Bestandteil des Mechanismus bildet der eigentliche Griff 3, der zum Öffnen des Handschuhfachdeckels 2 dient. Der Griff 3 ist schwenkbar mit dem Träger 12 über den Bolzen 8, der in der geschlossenen Stellung des Handschuhfachdeckels 2 im Wesentlichen senkrecht ist, verbunden, der an der Rückseite der Aussparung für die Finger 7 angeordnet ist.

Der Bolzen 8 ist im Träger 12 angeordnet respektive mit dem Träger 12 festverbunden. Der Griff 3 hat drinnen mindestens eine Öffnung oder ein Lager und mittels der Öffnung(en) oder Lager und des Bolzens 8 ist die schwenkbare Verbindung geschafft. Es kann auch umgekehrt sein, d.h. der Bolzen 8 ist mit dem Griff 3 festverbunden.

Der Haken 4 ist im Griff 3 mittels des an seiner Unterseite angeordneten Bolzens 9 integriert. Der Bolzen 9 wird zusammen mit dem Griff 3 ausgeklappt, jedoch die Reaktion vom ausklappbaren Haken 4 wird auf den Träger 12 übertragen. Der ausklappbare Haken 4 weist einen Ausläufer 10 auf, der in der geöffneten Betriebsstellung in die Raste 11 eingreift, welche einen Bestandteil des Trägers 12 bildet. Dies ist der Fig. 6 zu entnehmen.

In der Fig. 7 ist ein Schnitt B-B des Griffs 3 des Handschuhfachdeckels 2 mit dem ausgeklappten integrierten Haken 4 und mit dem Hebel 13 dargestellt, der den Haken 4 in die Ausgangsruhestellung zurückstellt, wenn der Griff 3 zum Öffnen betätigt wird und an dem Haken 4 nichts aufgehängt ist. Wäre auf dem Haken 4 eine Tasche sowie ein Kleidungsstück oder eine Kopfbedeckung aufgehängt, würde der Haken 4 in seiner ausgeklappten Betriebsstellung und somit auch der Griff 3 in der geschlossenen Ruhestellung versperrt.

Wird vom Haken 4 die Tasche, Handtasche oder ein Kleidungsstück abgehängt und befindet sich der Haken 4 in der ausgeklappten Stellung, so wird beim Öffnen des kompletten Griffs 3 und somit des Handschuhfachdeckels 2 der ausgeklappte Haken 4 in die geschlossene Stellung gegenüber dem Griff 3 zurückgestellt. Der Träger 12 umfasst einen Hebel 13, wobei mittels des Hebels 13 der Haken 4 in die geschlossene Stellung beim Öffnen des Griffs 3 des Handschuhfachdeckels 2 zurückgestellt wird.

### Bezugszeichenliste

- 1: - Schalttafel
- 2: - Handschuhfachdeckel
- 3: - Griff
- 4: - ausklappbarer Haken
- 5: - Aussparung oder Vorsprung am Haken
- 6: - Aussparung im Deckel
- 7: - Aussparung für die Finger
- 8: - Bolzen, der den Träger und den Griff schwenkbar verbindet
- 9: - Bolzen, der den ausklappbaren Haken und den Griff schwenkbar verbindet
- 10: - Ausläufer
- 11: - Raste im Träger
- 12: - Träger
- 13: - Hebel

- O: - Drehachse des Griffs mit integriertem Haken

## Patentansprüche

1. Der Handschuhfachdeckel (2) weist eine Aussparung (6) auf, in der ein Griff (3) zum Öffnen des Handschuhfachdeckels (2) und ein ausklappbarer Haken (4) angeordnet sind, wobei der ausklappbare Haken (4) in den Griff (3) des Handschuhfachdeckels (2) integriert ist, wobei ein Träger (12) in der Aussparung (6) des Handschuhfachdeckels (2) befestigt ist, **dadurch gekennzeichnet, dass** der Griff (3) des Handschuhfachdeckels (2) mit dem Träger (12) über einen in der Frontansicht auf den Griff (3) im Wesentlichen senkrecht angeordneten ersten Bolzen (8) schwenkbar verbunden ist, und dass der ausklappbare Haken (4) mit dem Griff (3) über einen zweiten Bolzen (9) schwenkbar verbunden ist, wobei in der ausgeklappten Betriebsstellung des Hakens (4) der Griff (3) des Handschuhfachdeckels (2) in seiner geschlossenen Stellung versperrt ist.

2. Der Handschuhfachdeckel (2) nach vorgenannten Ansprüchen, **dadurch gekennzeichnet, dass** der Haken (4) einen Ausläufer (10) aufweist, wobei mit dem Ausläufer (10) und der Raste (11) im Träger (12) der Haken (4) in der ausgeklappten Betriebsstellung des Hakens (4) gesichert ist.

3. Der Handschuhfachdeckel (2) nach vorgenannten Ansprüchen, **dadurch gekennzeichnet, dass** der Träger (12) einen Hebel (13) aufweist, wobei mit dem Hebel (13) der Haken (4) beim Öffnen des Griffs (3) des Handschuhfachdeckels (2) in die geschlossene Stellung zurückgestellt wird.

4. Der Handschuhfachdeckel (2) nach vorgenannten Ansprüchen, **dadurch gekennzeichnet, dass** in der geöffneten Stellung des Griffs (3) des Handschuhfachdeckels (2) der ausklappbare Haken (4) in seiner geschlossenen Stellung versperrt ist.

5. Der Handschuhfachdeckel (2) nach vorgenannte Ansprüchen, **dadurch gekennzeichnet, dass** in der geschlossenen Ruhestellung des Hakens (4) und des Griffs (3) die Außenoberflächen des Hakens (4), des Griffs (3) und des Deckels (2) im Wesentlichen eine Ebene bilden.

6. Der Handschuhfachdeckel (2) nach vorgenannten Ansprüchen, **dadurch gekennzeichnet, dass** der Haken (4) einen Vorsprung oder eine Aussparung (5) aufweist.

## Claims

1. The glove compartment lid (2) has a recess (6), in which a handle (3) for opening the glove compartment lid (2) and a fold-out hook (4) are arranged, wherein the fold-out hook (4) is integrated into the handle (3) of the glove compartment lid (2), wherein a support (12) is fastened in the recess (6) of the glove compartment lid (2), **characterized in that** the handle (3) of the glove compartment lid (2) is connected pivotably with the support (12) via a first bolt (8) arranged substantially perpendicular in the front view on the handle (3), and that the fold-out hook (4) is connected pivotably with the handle (3) via a second bolt (9), wherein in the fold-out operating position of the hook (4) the handle (3) of the glove compartment lid (2) is locked in its closed position.

2. The glove compartment lid (2) according to the aforementioned claims, **characterized in that** the hook (4) has an extension (10), wherein with the extension (10) and the catch (11) in the support (12) the hook (4) is secured in the fold-out operating position of the hook (4).

3. The glove compartment lid (2) according to the aforementioned claims, **characterized in that** the support (12) has a lever (13), wherein with the lever (13) the hook (4) upon opening of the handle (3) of the glove compartment lid (2) is reset in the closed position.

4. The glove compartment lid (2) according to the aforementioned claims, **characterized in that** in the opened position of the handle (3) of the glove compartment lid (2) the fold-out hook (4) is locked in its closed position.

5. The glove compartment lid (2) according to the aforementioned claims, **characterized in that** in the closed rest position of the hook (4) and of the handle (3) the outer surfaces of the hook (4), of the handle (3) and of the lid (2) substantially form a plane.

6. The glove compartment lid (2) according to the aforementioned claims, **characterized in that** the hook (4) has a projection or a recess (5).

## Revendications

1. Couvercle de boîte à gants (2) comprenant un évidement (6), dans lequel une poignée (3) pour l'ouverture du couvercle de boîte à gants (2) et un crochet rabattable (4) sont disposés, le crochet rabattable (4) étant intégré dans la poignée (3) du couvercle de boîte à gants (2), un support (12) étant fixé dans l'évidement (6) du couvercle de boîte à gants (2), **caractérisé en ce que** la poignée (3) du couvercle de boîte à gants (2) est reliée de manière pivotante avec le support (12) par l'intermédiaire d'une première tige (8) disposée globalement perpendiculairement dans la vue frontale de la poignée (3) et **en ce que** le crochet rabattable (4) est relié de manière pivotante avec la poignée (3) par l'intermédiaire d'une deuxième tige (9), moyennant quoi, dans la position de fonctionnement déployée du crochet (4), la poignée (3) du couvercle de boîte à gants (2) étant bloquée dans sa position fermée.

2. Couvercle de boîte à gants (2) selon les revendications précédentes, **caractérisé en ce que** le crochet (4) comprend une ramification (10), le crochet (4) étant sécurisé dans la position de fonctionnement déployée du crochet (4) avec la ramification (10) et le cran (11) dans le support (12).

3. Couvercle de boîte à gants (2) selon les revendications précédentes, **caractérisé en ce que** le support (12) comprend un levier (13), le crochet (4) étant rappelé vers la position fermée lors de l'ouverture de la poignée (3) du couvercle de boîte à gants (2) avec le levier (13).

4. Couvercle de boîte à gants (2) selon les revendications précédentes, **caractérisé en ce que**, dans la position ouverte de la poignée (3) du couvercle de boîte à gants (2), le crochet rabattable (4) est bloqué dans sa position fermée.

5. Couvercle de boîte à gants (2) selon les revendications précédentes, **caractérisé en ce que**, dans la position de repos fermée du crochet (4) et de la poignée (3), les surfaces externes du crochet (4), de la poignée (3) et du couvercle (2) forment globalement un plan.

6. Couvercle de boîte à gants (2) selon les revendications précédentes, **caractérisé en ce que** le crochet (4) comprend une saillie ou un évidement (5).
